Europäisches Patentamt

(19) European Patent Office

Office européen des brevets

(11) Publication number: **0 098 347**
**B1**

(12) **EUROPEAN PATENT SPECIFICATION**

(45) Date of publication of patent specification: **11.05.88**

(21) Application number: **83102567.1**

(22) Date of filing: **16.03.83**

(51) Int. Cl.⁴: **B 65 D 81/02**

(54) A plastic shock absorber for packing and process for producing the same.

(30) Priority: **01.07.82 JP 98267/82 u**
**10.07.82 JP 104753/82 u**
**24.09.82 JP 164885/82**

(43) Date of publication of application:
**18.01.84 Bulletin 84/03**

(45) Publication of the grant of the patent:
**11.05.88 Bulletin 88/19**

(84) Designated Contracting States:
**DE FR GB NL**

(56) References cited:
**BE-A- 792 963**
**CH-A- 366 794**
**DE-A-1 486 376**
**FR-A-1 175 906**
**US-A-4 076 872**

(73) Proprietor: **Kabushiki Kaisha E.P.E.**
**34-3, 5-chome, Nishinippori**
**Arakawa-ku Tokyo (JP)**

(72) Inventor: **Yamashiro, Hiroshi**
**34-3, 5-chome, Nishinippori**
**Arakawa-ku Tokyo (JP)**

(74) Representative: **Gille, Christian, Dipl.-Ing. et al**
**Türk, Gille + Hrabal Patentanwälte Bruckner**
**Strasse 20**
**D-4000 Düsseldorf 13 (DE)**

## Description

The present invention relates to a plastic shock absorber for packing comprising a series of hollow units made of a plastic material and to a process for producing it.

In the prior art, as a shock absorber for an object packed in a packing container, non-hollow bodies having a spherical or spaghetti shape and being made of foamed plastics and the like are normally packed in individual and separate pieces. Accordingly, shock absorption is achieved by the individual, separate bodies. Integrated shock absorbing action can never be expected. The packings, therefore, act hydrodynamically permitting the surrounded object to move and vibrate in accordance with the movement and deformation of the packings, and thus, less satisafactory shock absorption is provided. Moreover, those are used in separate drops and thus difficult to handle. In addition, a great amount of material is necessary owing to non-hollow bodies, necessarily leading to high cost. Furthermore, environmental pollution can be a problem in disposal by burning.

From CH—A—366 794 there is known a plastic shock absorber for packing which is provided by heat-pressing a cylindrical plastic body at lines spaced longitudinally while blowing a gas into the cylindrical body, thereby forming a series of hollow units containing gas as well as a process for producing such a plastic shock absorber for packing. The air filled pads formed thereby are connected with one another via ribs crossing one another and lying in a common plane. Each hollow unit or pad has therefore the shape of a rectangle and these rectangular units are uniformly distributed in the longitudinal and width direction in form of a band-like material. In DE—A—1 486 376 there is described and shown a container of a tetrahedron as well as a process for producing it. Such a container is filled with liquids, powders, or the like, such as foods, for packing and transporting such materials.

It is an object of the present invention to provide a shock absorber producing a superior shock absorbing action achieved in one body by a plurality of units containing a gas.

It is another object of the present invention to provide a shock absorber which can be mass-produced at low cost by a simplified equipment.

The features of the present invention are specified in Claim 1. Preferred improvements are subject of the subclaims.

In accordance with the present invention a shock absorber is provided, which forms a series of hollow units of trigonal shape. As the gas contained in the hollow units is controlled to be originally cooler than the open or ambient air, the temperature inside the hollow units increase to that of the surroundings to thus allow the gas to expand. As a result, the hollow units swell to be roundish and have therefore far superior shock absorbing effects. The trigonal shape is superior in bulkiness as well as in effect of preventing surrounded objects from moving, when the plastic shock absorber according to the invention is used for packing.

The foregoing and other objects, features, and advantages of the invention will be apparent from the following more particular description of the preferred embodiments of the invention as illustrated in the accompanying drawings, wherein:

Figure 1 and Figure 2 are schematic illustrations showing an embodiment of a production process of a shock absorber of the present invention;

Figure 3 is a perspective view of a shock absorber of the present invention;

Figure 4 is a perspective view of a shock absorber, having a cut in a heat-pressed portion thereof; and

Figure 5 is a schematic illustration showing how to use a shock absorber of the present invention.

The term "vertical" or "horizontal" as used herein after is related to the space surrounding the shock absorber referred to and means a geometrical configuration such that two adjacent heat-pressed lines lie in transverse planes perpendicular to one another.

As a plastic film used in the present invention, a laminated film is preferred. Most preferably, a laminated film composed of polyethylene and polyester or polyamide (nylon) is employed. The thickness of the film is not limited, in particular, and normally had best be selected from a range of from about 10 to about 50 μm for polyethylene, about 10 to about 20 μm for polyester and about 10 to about 20 μm for polyamide.

The diameter of a cylindrical body is not specifically limited and normally selected from a range of from about several centimeters and several tens of centimeters, more preferably 4 to 10 centimeters. Vertical and horizontal heat-pressing had best be made at intervals ranging from several centimeters and several tens of centimeters, more preferably 4 to 10 centimeters.

As a gas used in the present invention, air is most preferable in respects of cheapness and easy obtaining, but other inert gases are also usable. A gas controlled to be cooler than the open air, more preferably, cooler by about 10°C or more than the open air is used. That is, in cases where the temperature of the gas sealed in a cylindrical body is equal to that of the open air, the gas somewhat expands with heat at the time of heat-pressing. Therefore, when the temperature inside hollow units formed by vertical and horizontal heat-pressing becomes equal to that of the open air, the hollow units somewhat deflate. In contrast, when a gas controlled to be cooler than the open air is contained, the temperature inside the hollow units go up to that of the surroundings to thus allow the gas to expand. As a result, the hollow units swell to be roundish, giving far superior shock absorbing effects.

Heat-pressing is effected substantially vertically and horizontally. More preferably, the heat-pressing should be made alternatively vertically and horizontally. The hollow units thus obtained are of trigonal shapes and swollen roundish trigonal shapes when contained a gas cooler than the open air, as aforesaid. The trigonal shape is superior to bulkiness as well as in effect of preventing surrounded objects from moving.

When cuts are made on the heat-pressed portions of the hollow units, cutting to an optional length is possible without using knives or scissors and hence working efficiency is markedly enhanced. The cuts may include a sewing stitch-like cut, a slit-like cut excepting both ends and the like.

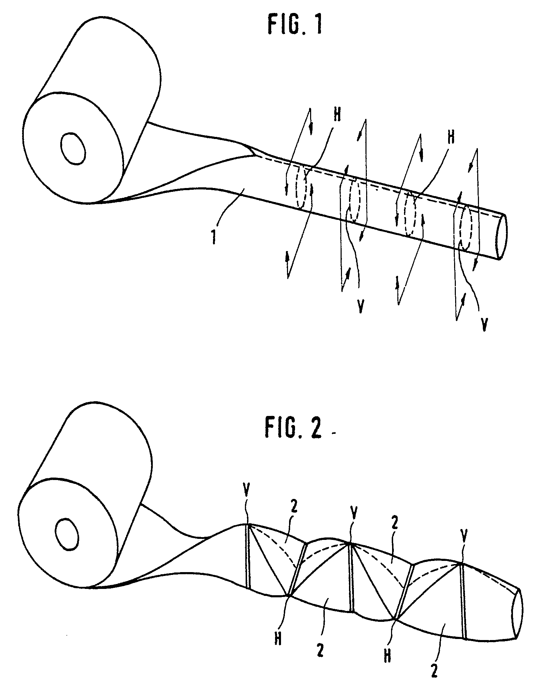

A process for producing a shock absorber of the present invention will be explained by referring to Figure 1 and Figure 2.

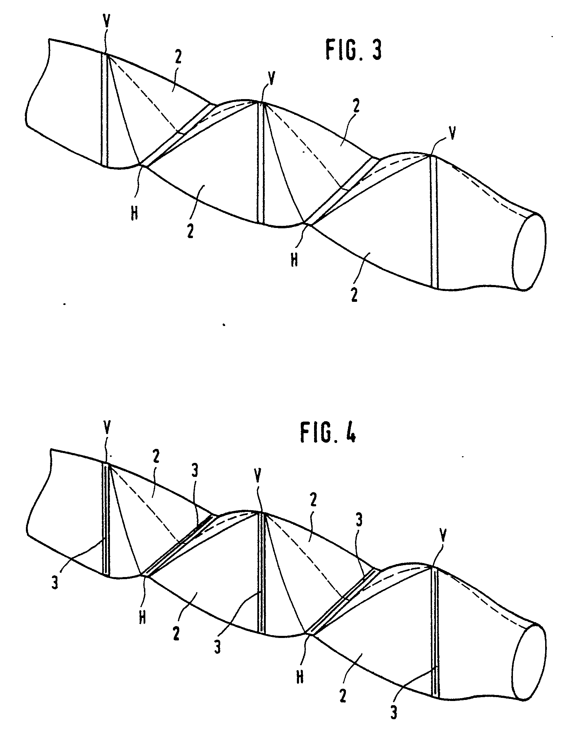

As shown in Figure 1, a laminated film is, at first, prepared by an ordinary manner, then the both edges of the laminated film are heat-pressed to thus form a continuous cylindrical body 1. Then, the so obtained cylindrical body 1 is heat-pressed at suitable intervals substantially in vertical V and horizontal H directions to thereby obtain a shock absorber of the present invention which comprises a plurality of substantially trigonal hollow units connected in series. Figure 3 is a perspective view of the obtained shock absorber of the present invention. The heat-pressing is conducted at the temperature between about 130°C and about 180°C under the pressure between about 4 Kg/cm² (about 4 bar) and about 10 Kg/cm² (about 10 bar) for about 0.3 to about 0.7 seconds.

Hereinafter, the present invention will be explained in more detail by way of examples that follow, to which examples the invention is in no way limited.

Example 1

A laminated film comprising a polyethylene film "Sumikasen" produced by Sumitomo Chemical Co., Ltd., having the thickness of 20 μm and a polyester film "Lumilar" produced by Toray Industries Inc., having the thickness of 12 μm was obtained in an ordinary process. Next, as was shown in Figure 1, the opposite both edges of the laminated film were heat-pressed so as to keep the polyethylene film inside at the temperature of 150°C under the pressure of 5 Kg/cm² (about 5 bar) to thereby provide a continuous cylindrical body 1, about 6 cm in diameter. The resulting cylindrical body 1 was heat-pressed vertically V and horizontally H, alternately, at an interval of about 7 cm, while blowing air into the cylindrical body and a shock absorber comprising a plurality of substantially trigonal-shaped units 2 linked in series, each unit having a side of about 9 cm was obtained as depicted in Figure 2 and Figure 3.

Example 2

A laminated film was prepared which comprises a polyethylene film "Sumikasen" having the thickness of 20 μm and a polyamide film "Amilan" produced by Toray Industries Inc., having the thickness of 15 μm. Using the laminated film, a shock absorber was obtained in a similar fashion to the procedure of Example 1, excepting that the temperature of air was varied. The results obtained are given in Table I. The above procedure was carried out at about 10°C under atmospheric pressure.

TABLE I

| Temperature of air (°C) | State of the hollow unit when the inside reached the open air (10°C) |
|---|---|
| 10 | Elasticity is poor and shock absorption is not sufficient. |
| 5 | Substantially trigonal shape is maintained but shock absorption is not satisfactory. |
| 0 | It becomes close to expected roundish shape, considerably, but sufficient shock absorption is not yet obtained. |
| − 5 | It swells to be somewhat hard and shock absorption is virtually satisfactory. |
| −10 | It swells to be hard considerably with good shock absorption. |

Example 3

A slit-like cuts 3 were made on the heat-pressed portions V and H, excepting both ends thereof, of the shock absorber, prepared in Example 2, in which air cooled to 10°C was contained. Figure 4 shows a perspective view of the shock absorber obtained.

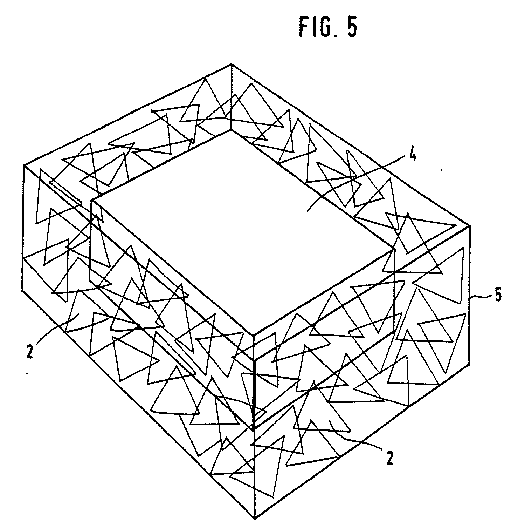

In Figure 5, there is shown a schematic representation illustrating how a shock absorber of the present invention is used. The numeral 4 is an object and 5 is a package container. A shock absorber of the present invention is superior in static and dynamic shock absorbing characteristics. For instance, falling test was performed in which an apparatus weighing 10 Kg packed in a polycarbonate container with a shock absorber of the present invention was allowed to fall down from the height of 60 cm every 90 seconds for 8 hours but neither deformation nor damages of the shock absorber was observed with the shock absorbing characteristics unchanged.

As apparent from the foregoing, shock absorbers of the present invention are exceedingly useful in the industry, having numerous advantages as set forth below:

## 0 098 347

(1) Since hollow units are connected in series by horizontal heat-pressed portions H and vertical heat-pressed portions V, the units are enfolded while being pulled one another to thus produce a shock absorbing effect in one body. Accordingly, the load imposed on each of the units is dispersed uniformly and superior pressure resistance and shock absorption are provided.

(2) Air is preferably used to serve as a gas contained so that the amount of materials can be drastically reduced. Hence, a shock absorber is produced very economically and contributes to the saving of the resources.

(3) Continuous production is possible by a simplified equipment and thus, it can be mass-produced.

(4) It is much easier to handle, as compared with independent, separate bodies which have been used heretofore. Moreover, cuts made on the heat-pressed portions enhance working efficiently surprisingly.

### Claims

1. Plastic shock absorber for packing, comprising a cylindrical hollow plastic body (1) filled with gas and heat pressed at lines (V, H) spaced longitudinally thereby forming a series of hollow units (2) containing gas, characterized in that said heat-pressed lines (V, H) are so disposed geometrically that two adjacent lines lie in transverse planes perpendicular to one another, so that said units (2) are trigonal in shape, and that said gas is controlled to be originally cooler than the open or ambient air, so that the absorber is swollen to be roundish.

2. Shock absorber as claimed in Claim 1, characterized in that said plastic body (1) is made of a laminated film comprising at least one material selected from the group consisting of polyethylene, polyester, and polyamide.

3. Shock absorber as claimed in Claim 1, characterized in that said gas is air.

4. Shock absorber as claimed in Claim 1, characterized in that said gas is controlled to be cooler by 10°C or more than the open or ambient air.

5. Shock absorber as claimed in anyone of Claims 1 to 4, characterized in that a cut (3) is provided in each heat-pressed portion (V and H).

6. Process for producing a plastic shock absorber for packing as claimed in anyone of Claims 1 to 5, comprising heat-pressing a cylindrical plastic film at lines spaced longitudinally while blowing gas into the so formed cylindrical body (1) thereby forming series of hollow units (2) containing gas, characterized in that said heat-pressing is carried out, so that said heat-pressed lines lie in transverse planes perpendicular to each other and said gas is controlled to be originally cooler than the open or ambient air.

7. Process as claimed in Claim 6, characterized in that a cut (3) is made in the heat-pressed lines (V and H).

### Patentansprüche

1. Stoßabsorbierendes Verpackungselement aus Kunststoff, das einen zylindrischen Hohlkörper (1) aus Kunststoff aufweist, der mit Gas gefüllt und entlang den Linien (V, H) in Längsabständen warm verpresst ist, um so eine Reihe von Gas enthaltenden Hohlkörpern (2) zu bilden, dadurch gekennzeichnet, dass die warm verpressten Linien (V, H) geometrisch so angeordnet sind, dass zwei benachbarte Linien in Querebenen senkrecht zueinander liegen, so dass die Hohlkörper (2) eine trigonale Form haben, und dass das Gas so kontrolliert wird, dass es anfänglich kühler als die Aussen- oder Umgebungsluft ist, so dass das stoßabsorbierende Element in runde Form aschwillt.

2. Stoßabsorbierendes Verpackungselement nach Anspruch 1, dadurch gekennzeichnet, dass der Kunststoffkörper (1) aus einem laminierten Film hergestellt ist, der mindestens ein Material enthält, das aus der Gruppe ausgewählt ist, die aus Polyäthylen, Polyester und Polyamid besteht.

3. Stoßabsorbierendes Verpackungselement nach Anspruch 1, dadurch gekennzeichnet, dass das Gas Luft ist.

4. Stoßabsorbierendes Verpackungselement nach Anspruch 1, dadurch gekennzeichnet, dass das Gas so kontrolliert wird, dass es um 10°C oder mehr kühler als die Aussen- oder Umgebungsluft ist.

5. Stoßabsorbierendes Verpackungselement nach einem der Ansprüche 1 bis 4, dadurch gekennzeichnet, dass in jedem warm gepressten Teil (V und H) ein Schnitt (3) vorgesehen ist.

6. Verfahren für die Herstellung eines stoßabsorbierenden Verpackungselementes aus Kunststoff nach einem der Ansprüche 1 bis 5, bei dem ein zylindrischer Kunststofffilm an im Längsabstand angeordneten Linien warm verpresst wird, während Gas in den so geformten zylindrischen Hohlkörper (1) geblasen wird, um so eine Reihe von Gas enthaltenden Hohlkörpern (2) zu bilden, dadurch gekennzeichnet, dass das Warmpressen so durchgeführt wird, dass warm verpresste Linien in Querebenen senkrecht zueinander liegen, und dass das Gas so kontrolliert wird, dass es anfänglich kühler als die Aussen- oder Umgebungsluft ist.

7. Verfahren nach Anspruch 6, dadurch gekennzeichnet, dass ein Schnitt (3) in die warm verpressten Linien (V und H) eingebracht wird.

### Revendications

1. Absorbeur de choc pur emballage, comprenant un corps cylindrique creux en matière plastique (1)

4

rempli de gaz et thermoscellé sur des lignes (V, H) espacées longitudinalement en formant ainsi une succession d'unités creuses (2) contenant du gaz, caractérisé en ce que ces lignes thermoscellées (V, H) sont disposées géomètriquement de telle façon que deux lignes adjacentes se situent dans des plans transversaux perpendiculaires l'un à l'autre, de sorte que ces unités (2) sont de forme tétraèdrique et que ce gaz est thermorégulé de façon à être au départ plus froid que l'air libre ou ambiant, de sorte que l'absorbeur est gonflé pour devenir arrondi.

2. Absorbeur de choc selon la revendication 1, caractérisé en ce que ledit corps en matière plastique (1) est composé d'un film lamifié comprenant au moins un matériau choisi dans le groupe constitué du polyéthylène, polyester et polyamide.

3. Absorbeur de choc selon la revendication 1, caractérisé en ce que ledit gaz est de l'air.

4. Absorbeur de choc selon la revendication 1, caractérisé en ce que le gaz est thermorégulé de façon à avoir une température inférieure de 10°C ou plus à celle de l'air libre ou ambiant.

5. Absorbeur de choc selon l'une quelconque des revendications 1 à 4, caractérisé en ce qu'une découpe (3) est ménagée dans chaque partie thermoscellée (V et H).

6. Procédé de fabrication d'un absorbeur de choc en matière plastique pour emballage selon l'une quelconque des revendications 1 à 5, comprenant le thermoscellage d'un film plastique cylindrique sur des lignes espacées longitudinalement tout en insufflant du gaz dans le corps cylindrique ainsi formé (1), ce qui forme ainsi une succession d'unités creuses (2) contenant du gaz, caractérisé en ce que ce thermoscellage est réalisé de telle façon que ces lignes thermoscellées se situent dans des plans transversaux perpendiculaires l'un à l'autre et que ledit gaz est thermorégulé pour être plus froid à l'origine que l'air libre ou ambiant.

7. Procédé selon la revendication 6, caractérisé en ce que une découpe (3) est réalisée dans les lignes thermoscellées (V et H).

FIG. 1

FIG. 2 -

FIG. 3

FIG. 4

## FIG. 5